# EUROPEAN PATENT SPECIFICATION

(11) **EP 0 727 039 B1**
(45) Date of publication and mention of the grant of the patent: **13.05.1998**
(21) Application number: 94930890.2
(22) Date of filing: 26.10.1994
(51) Int. Cl.: G01B 11/26, G01B 21/22, G01S 17/88, B61K 9/12

(54) **WAYSIDE MONITORING OF THE ANGLE-OF-ATTACK OF RAILWAY VEHICLE WHEELSETS**
BAHNSEITIGE MESSVORRICHTUNG FUR DIE WINKELLAGE EINES ZUGWAGENRADSATZES
CONTROLE EN BORD DE VOIE DE L'ANGLE D'ATTAQUE DE L'ESSIEU MONTE D'UN VEHICULE FERROVIAIRE

(30) Priority: 01.11.1993 CA 2102140
(43) Date of publication of application: 21.08.1996
(73) Proprietor: WAYSIDE INSPECTION DEVICES INC., Westmount, Quebec H3Z 1L5 (CA)
(72) Inventor: IZBINSKY, Grigory, Westmount, Quebec H3Z 1L5 (CA); D'AOUST, Denis, Hudson Heights, Quebec J0P 1J0 (CA)
(74) Representative: Ritter, Stephen David
(86) International application number: CA9400592
(87) International publication number: WO9512803

(56) References cited:
- WO-A-88/02713
- US-A- 4 155 526

## Description

This invention relates to a new system for angle-of-attack measurement which can be used for wayside inspection of the wheelsets of railway trucks.

The term "angle-of-attack" is commonly used in the railway industry to identify the angle between the plane of a wheel and the tangent to the outer rail upon which the wheel is engaged. As is well understood, all wheels of a railway truck do not line up perfectly tangentially with respect to the rail when the truck negotiates a curve. Normally, the angle of attack of a truck wheel can be predicted given the type of truck, its dimensions, and the truck geometry. Higher than normal angles-of-attack cause excessive maintenance expenses and may lead to derailment. Railway efficiency and safety may be enhanced by performing regular wayside inspections in order to identify the wheelsets generating angles-of-attack that are not within an acceptable range. Anomalous wheelset angle-of-attack usually indicates a need for repair. The data generated by a wayside angle-of-attack measurement station, identifying the cars which dempnstrate abnormal performance, will be communicated directly to a car maintenance planning system.

US-A-4,155,526 discloses a wheel measuring apparatus for detecting wear of wheels by diameter measurements. The document does not disclose means for measuring an angle-of-attack.

WO-88/02713 discloses a wheel monitoring apparatus, but does not disclose angle-of-attack measurement.

One aspect of the present invention provides a system as set out in Claim 1.

Another aspect provides a method for monitoring the angle-of-attack of the wheelsets of a railway vehicle as set out in Claim 2.

The invention also provides apparatus as set out in Claim 6.

Preferred features are set out in the dependent claims.

The invention will further be described, by way of example only, with reference to the accompanying drawings wherein:
- Figure 1 is a somewhat schematic view of a railway truck moving on a curved track section;
- Figure 2 is a schematic plan view illustrating the angle-of-attack of the wheels of a single wheelset in relation to a curved track section;
- Figure 3 is a view similar to Figure 1 but including a schematic representation of the monitoring system of the present invention;
- Figure 4 is a plan view illustrating the location of a rangefinder in relation to the wheel of a rail vehicle;
- Figure 5A is an enlarged fragmentary elevational view of a portion of the system of Figure 3;
- Figure 5B is a sectional view taken on the line 5B-5B in Figure 5A; and
- Figure 6 is a chart showing a wheel profile as measured by wayside system.

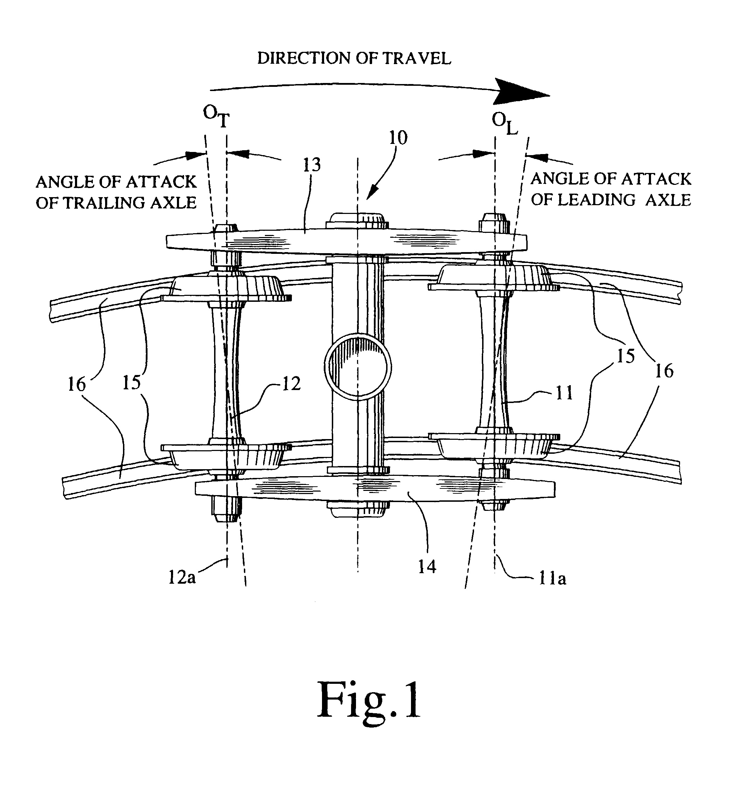

Figure 1 shows a railway truck 10 having leading and trailing wheelsets 11 and 12 respectively, rotatably mounted on transverse horizontal axes lla, 12a, in longitudinal frame members 13, 14. The railway truck 10 is shown as moving towards the right over the rails 16 of a curved track section. The angle-of-attack of the wheels 15 of each wheelset and the rails 16 is represented by the angles, θ_{L} and θ_{T} as seen in plan view between the wheel axes and a line radial to the track intersecting the wheel axes midway between the wheels.

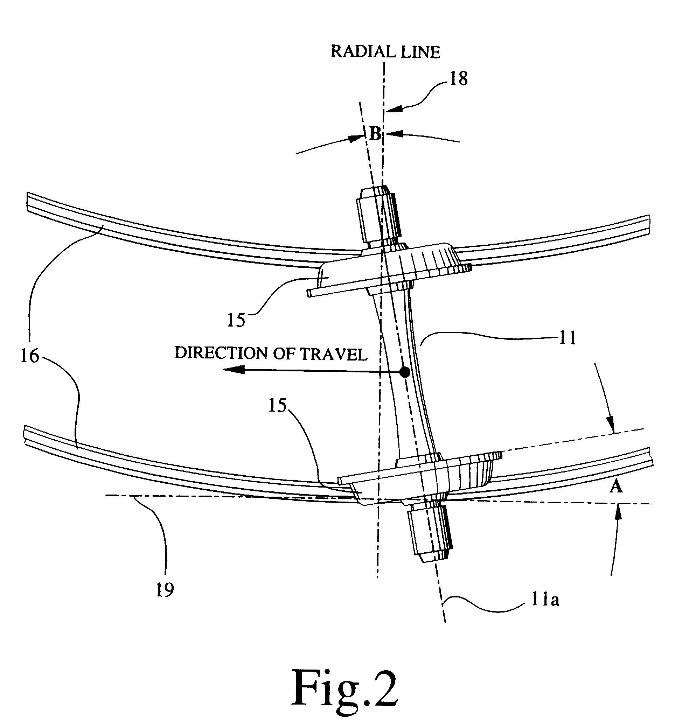

In the prior art, an angle-of-attack measurement system was developed by the Department of research, CP Rail, in the middle of the 70's. The method for measuring the angle-of-attack utilized three low power laser (or infrared diode) light emitters and light detectors aligned to the radial line of the curve. A wheelset interrupting or clearing each of the light beams caused a change of state in the output signal of each detector. These output signals were monitored by a processor unit which calculated and reported the angle-of-attack for each wheelset. This prior art system was designed as a research tool for conducting short controlled tests, and successful measurement relied upon accurate alignment of the system in relation to the radial line 18 (as seen in Figure 2). Elaborate precautions had to be taken to prevent even very small displacements of the system from its precise position of alignment. This condition is very difficult to maintain in the railway environment. Flying particles, lifted by moving wheels (snow, dust, etc.), and objects which are not part of the wheel but located close to it (sand pipes, brake shoes, loose chains, etc.) such that they cross the optical path of the system components also cause measurement errors.

The measurement system of the present invention avoids the above described problems and effects "direct" measurement of the angle-of-attack because it provides a measure of the angle between the wheel itself and the rail (angle A in Figure 2) not the angle between the wheelset axis and a horizontal line perpendicular to the rail at the point of measurement (angle B in Figure 2) as in the above mentioned earlier wayside angle-of-attack measurement system.

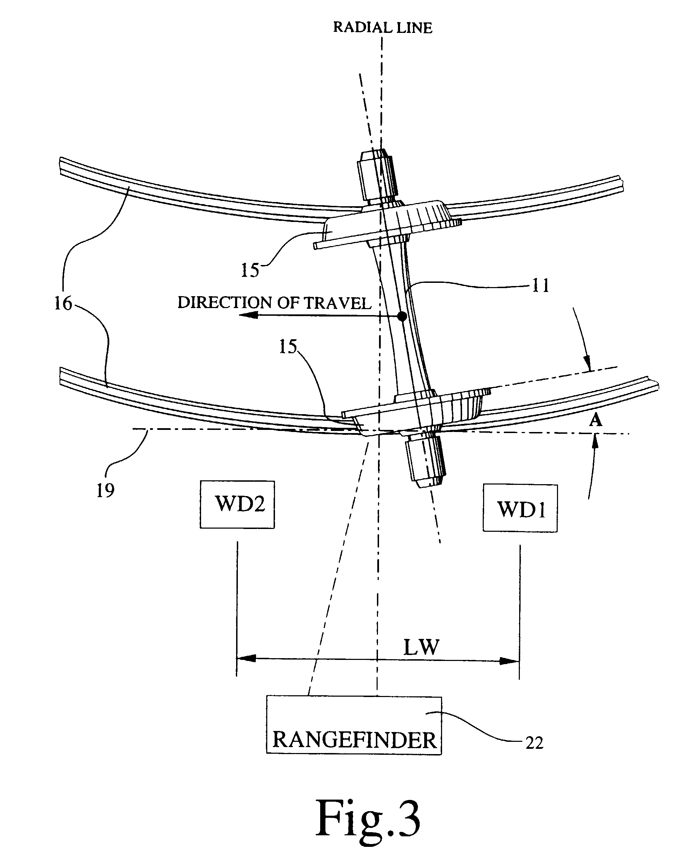

Referring to Figure 3, it will be seen that the measurement system of the present invention is located to one side of the track and spaced substantially from the track and any moving equipment thereon so that the measurement results are not adversely affected by the shocks and vibrations typically encountered in a railway track. Since the system measures directly from the wheels, it is not sensitive to possible instantaneous or small permanent misalignments relative to any radial or other reference line.

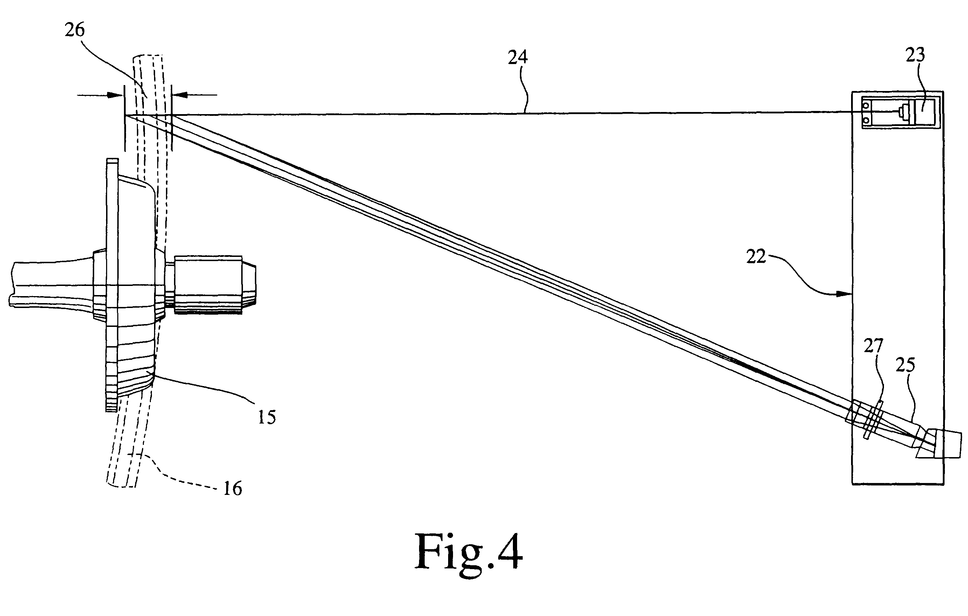

As shown in Figure 4, the system comprises an optical rangefinder 22 offset a substantial distance to the field side of the track and aligned towards the track to scan wheels passing on the adjacent rail 16 at a suitable height above the rail top surface, i.e. between 1.75 and 2.5 inches. The rangefinder 22 includes as shown in Figure 4 a 500 mW laser diode 23, commercialised by the Spectra Diode Company under part number SDL-2432-HI, which projects a beam of laser light 24 radially towards the track to be intercepted by a passing wheel 15. A 512 pixel line scan camera 25, commercialised by the Delsa Company under part number CL-C3-0512M, positioned at a fixed longitudinal horizontal displacement from the laser diode 23 is mounted behind a 200 mm focal length video lens 27 to scan the laser beam over a predetermined measurement range 26 in the region of the rail and to provide by triangulation a distance measurement when any portion of the surface of the wheel 15 intersects the laser beam and thus is illuminated by the light spot within the measurement range.

In other words, the pixel of the line scan camera 25 that is illuminated by the reflection of laser beam off the wheel 15, is correlated to the position of the laser beam spot on the wheel 15 within the measurement range 26. Accordingly, by observing which pixel is being illuminated, the distance from the laser diode 23 to the wheel 15 can be determined.

In a most preferred embodiment, the laser diode 23 is operated continuously during the angle-of-attack measurement operation. The line scan camera 25 takes measurements of the position of the laser beam spot on the wheel 15 at predetermined time intervals such as a measurement is made approximately every 0.1 inch on a wheel surface (10,000 times/sec. at a wheel velocity of 60 mph).

The measurement system also includes adjacent the rangefinder 22 a pair of longitudinally spaced wheel detectors WD1 and WD2 spaced apart by a distance Lw to define a measurement window. The wheel detector WD1 senses the approach of a wheel to the measurement site, and the detector WD2 senses when the same wheel leaves the measurement site. From the interval between the successive actuation of wheel detectors WD1 and WD2 and the length of the window Lw, the velocity of a wheelset passing through the measurement site is readily calculated. Additionally, the wheel detector WD1 is coupled to switch on the rangefinder as a wheelset approaches the measurement site and the wheel detector WD2 switches it off as the wheelset leaves the measurement window.

The wheel detectors WD1 and WD2 are manufactured and commercialized by Servo Corporation of America under the name "Wheel Sense Transducer". The detector is a passive device including a permanent magnet U-shaped core and coil of wire wound around it. The detector is mounted to the rail so that a wheel moving on the rail will pass in proximity to the detector and will create a magnetic flux change through the U-shaped core that induces a detectable sinusoidal pulse signal in the coil of wire.

The passage of a wheel could also be detected with an array of strain gages applied on the web of the rail and configured to respond to the vertical load applied to the rail.

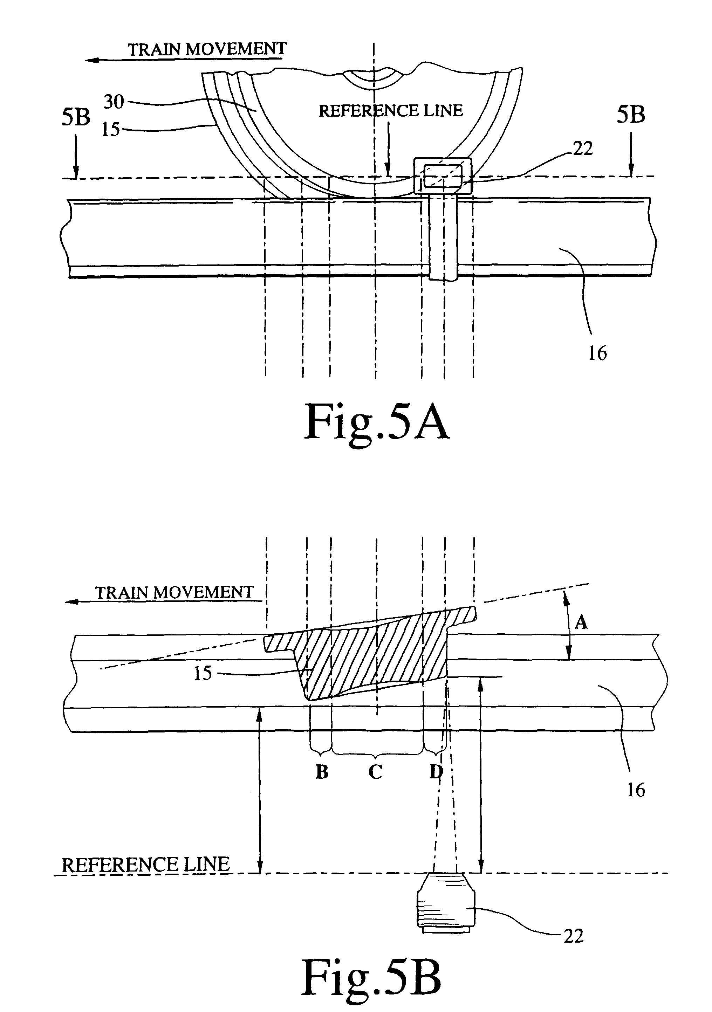

With reference to Figures 5A and 5B it will be understood that the rangefinder 22 will therefore repeatedly measure, along a measurement axis that is materialized by the laser beam, the distance between the rangefinder and the instantaneous registering point on the surface of the passing wheel that intercepts the measurement axis at the moment the distance measurement is being made. The distance measurement is effected at predetermined time intervals to provide a set of distance values associated to the time instants at which the distance measurements are taken.

The positions of these instantaneous registering points on the wheel is determined by the average wheel velocity, which as explained above, is computed from the distance Lw and the output signals of the wheel detectors WD1 and WD2. More specifically, the average velocity measurement allows to compute the distance travelled by the wheel between two successive distance measurements by the rangefinder as to establish the longitudinal position of the respective individual registering points.

Thus the distance measured by the rangefinder and the computed longitudinal positions provide coordinates by means of which the profile of the wheel surface can be charted.

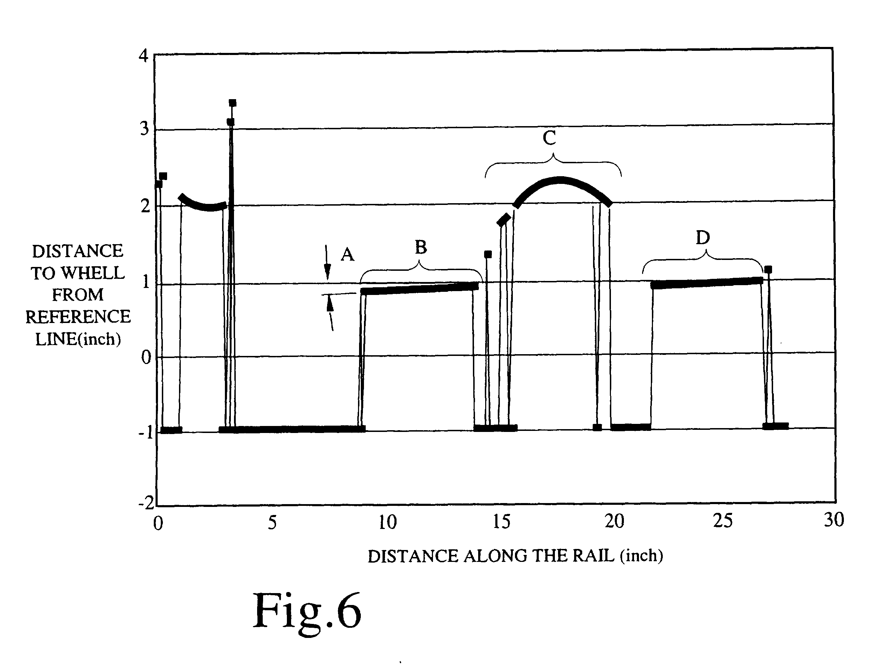

An example of a complete wheel profile image is shown in Figure 6 the major portions of which show a leading rim region B, an intermediate recessed region C, and a trailing rim region D, the corresponding regions being indicated in Figure 5B. The leading and trailing rim regions B and D are of a flat annular rim surface 30 (Figure 5A) lying in a plane at right angle to the wheel axis. The orientation of this surface 30 relative to the rail tangent is of course equivalent to the angle A (Figure 5B) i.e. the angle-of-attack.

Signal processing to generate the chart of Figure 6 is achieved with a personal computer suitably programmed to compute the distance travelled by the wheel between successive distance measurements and then to correlate the longitudinal position values to the respective distance measurements.

Computation of the angle-of-attack is performed successively for each wheel passing through the measurement window. The complete set of angles-of-attack for the wheelsets of a passing train can therefore be measured, recorded and analyzed, the measured values being compared with a predetermined criterion or standard range, and wheelsets with abnormal angles-of-attack thus identified. This therefore provides a means for wayside monitoring of the angles-of-attack of wheelsets of a passing train which can be performed in a reliable manner. The fact that the apparatus performs its measurements directly upon the passing wheel means that it does not require an excessive degree of precision in its location and alignment, which precision would in practice be virtually impossible to maintain in a typical operating environment.

## Claims

1. A system for installation along a rail (16) of a railroad track for measuring an angle defined between a monitored wheel (15) and an imaginary line tangent to the rail (16) on which the monitored wheel (15) travels, said system comprising:
a rangefinder (22) mounted to a fixed location beside the railroad track (16) for successively measuring at predetermined instants in time along a measurement axis a distance from the fixed location to the monitored wheel (15) travelling on the rail (16), said rangefinder (22) generating an output signal correlated to a distance between the fixed location and sites on the monitored wheel (15) intercepting said measurement axis at respective ones of said instants in time; and
a sensor (WD1, WD2) responsive to movement of the monitored wheel (15) on the rail (16) for generating an output signal correlated to a change of position of the monitored wheel (15) on the rail (16) relative to time, whereby said signals allow computation of a value for the angle defined between the monitored wheel (15) and the imaginary line tangent to the rail by establishing a correspondence between a variation of the distance measured along the measurement axis from the fixed location to the moving monitored wheel (15) and the change of position of the monitored wheel on the rail (16).

2. A method for monitoring the angle-of-attack of the wheelsets (11,12) of a railway vehicle (10) passing in succession over a curved track section, comprising:
locating a rangefinder (22) at a reference point in a position that is radial to the curved track section; repeatedly measuring at known intervals the instantaneous distance between said reference point and successive registering points on a face plate surface of a wheel (15) of each passing wheelset (11,12);
measuring the velocity of the wheels (15) of each wheelset (11,12) moving along said track section past said reference point; and
from said known intervals, said distance measurements, and said measured velocity, calculating the angle-of-attack of each said wheelset (11,12);
comparing said calculated angle-of-attack to a standard value range, and identifying wheelsets (11,12) whose angle-of-attack deviates from said standard range.

3. The method of Claim 2, including activating said rangefinder (22) only during intervals when there is a wheelset (11,12) close to or in register therewith.

4. The method of Claim 3, wherein said velocity measurement is effected by means of a pair of wheel detectors (WD1, WD2) spaced longitudinally of said track section to define a window which extends to both sides of the rangefinder (22) location, said detectors (WD1, WD2) measuring the elapsed time between the entry of a wheelset (11,12) into said window and departure of said wheelset (11,12) out of said window, and calculating from this elapsed time and the known length of the window, the velocity of such wheelset (11,12).

5. The method of Claim 4, wherein said detectors (WD1, WD2) are utilized to control said rangefinder (22) to operate only during periods when said wheelset (11,12) is within said window.

6. Apparatus for monitoring the angle-of-attack of the wheelsets (11,12) of a railway vehicle moving along a curved track section comprising:
a rangefinder (22) positioned at a reference point radial to said curved track section, said rangefinder (22) being adapted to repeatedly measure at known intervals the instantaneous distance between said reference point and successive registering points on a face plate surface of a wheel (15) of a passing wheelset (11,12);
detector means (WD1, WD2) responsive to motion of such wheel (15) along said radial section past said reference point to generate a signal representative of the velocity of such wheel (15);
computer means adapted to derive from said known intervals, said distance measurements, and said velocity signal, a measure of the angle-of-attack of each wheelset (11,12); and
means for comparing such measured angle-of-attack with a standard value range and identifying deviations therefrom.

7. Apparatus as claimed in Claim 6, wherein said velocity signal measuring means comprises a pair of detectors (WD1, WD2) mounted at spaced locations along said track to define a measuring window of predetermined length (Lw) that extends to both sides of said reference point.

8. Apparatus as claimed in Claim 7, wherein said rangefinder (22) is coupled to said detectors to be activated only when there is a wheel (15) within said window.

## Patentansprüche

1. System für die Installation entlang einer Schiene (16) eines Schienenstranges zur Messungen eines Winkels zwischen einem überwachten Rad (15) und einer imagenären Linie, die tangential zu der Schiene (16) liegt, auf welcher sich das überwachte Rad (15) bewegt, umfassend:
einen Abstandsmesser (22), angeordnet auf einer festen Position neben dem Schienenstrang (16) zur aufeinanderfolgenden Messung eines Abstandes entlang einer Meßachse von der festen Position zum auf der Schiene (16) bewegten, überwachten Rad (15) in vorbestimmten Zeitabständen, wobei der Abstandsmesser (22) ein Ausgangssignal erzeugt, welches einem Abstand zwischen der festen Position und Orten auf dem überwachten Rad (15) entspricht, welche die Meßachse zu entsprechenden Zeitabständen schneiden; und
einen Sensor (WD1, WD2), reagierend auf die Bewegung des überwachten Rades (15) auf der Schiene (16) zum Erzeugen eines Ausgangssignals, welches einer Änderung der Position des überwachten Rades (15) auf der Schiene (16) in Bezug auf die Zeit entspricht,
wobei die Signale die Berechnung eines Wertes für den Winkel zwischen dem überwachten Rad (15) und der imaginären zur Schiene tangentialen Linie ermöglichen, indem eine Zuordnung von Veränderungen des entlang der Meßachse von der festen Position zum bewegten Rad (15) gemessenen Abstandes und der Änderung der Position des überwachten Rades auf der Schiene (16) festgesetzt wird.

2. Verfahren zur Überwachung der Winkellage eines Zugwagenradsatzes (11, 12) eines Schienenfahrzeugs (10), welche aufeinanderfolgend einen Schienenkurvenbereich passieren, umfassend:
Anordnen eines Abstandsmessers (22) an einem Referenzpunkt in einer radial zur Schienenkurvensektion liegenden Position; wiederholt messen des aktuellen Abstandes zwischen dem Referenzpunkt und aufeinanderfolgenden Meßpunkten auf der Oberfläche eines Rades (15) jedes passierenden Radsatzes (11, 12) zu bekannten Intervallen;
Messen der Geschwindigkeit der Räder (15) eines jeden Radsatzes (11, 12), welche sich entlang der Schienensektion hinter dem Referenzpunkt bewegen; und
Errechnen der Winkellage eines jeden der Radsätze (11, 12) aus den bekannten Intervallen, den Abstandsmessungen und den Geschwindigkeitsmessungen;
Vergleichen der errechneten Winkellagen mit einem Standardwertbereich und Ermitteln der Radsätze (11, 12), deren Winkellage vom Standardwertbereich abweicht.

3. Verfahren nach Anspruch 2, dadurch gekennzeichnet, daß der Abstandsmesser (22) nur während der Intervalle aktiviert wird, zu denen ein Radsatz (11, 12) nahe zu dem Abstandsmesser oder in seinem Meßbereich ist.

4. Verfahren nach Anspruch 3, dadurch gekennzeichnet, daß die Geschwindigkeitsmessung mittels eines Paars von Raddetektoren (WD1, WD2) durchgeführt wird, welche in Längsrichtung der Schienensektion beabstandet sind, um ein Fenster zu definieren, welches sich nach beiden Seiten der Position des Abstandsmessers (22) erstreckt, wobei die Detektoren (WD1, WD2) die abgelaufene Zeit zwischen dem Eintritt eines Radsatzes (11, 12) in das Fenster und dem Austritt des Radsatzes (11, 12) aus dem Fenster hinaus messen und die Geschwindigkeit des Radsatzes (11, 12) aus der vergangenen Zeit und der bekannten Länge des Fensters errechnet wird.

5. Verfahren nach Anspruch 4, dadurch gekennzeichnet, daß die Detektoren (WD1, WD2) zur Steuerung des Abstandsmessers (22) verwendet werden, damit dieser nur während der Phasen in Betrieb ist, zu denen ein Radsatz (11, 12) innerhalb des Fensters ist.

6. Bahnseitige Meßvorrichtung für die Winkellage eines Zugwagenradsatzes (11, 12) eines sich entlang einer kurvigen Schienensektion bewegenden Schienenfahrzeuges, umfassend:
einen Abstandsmesser (22), positioniert an einem Referenzpunkt radial zur kurvigen Schienensektion, welcher dafür vorgesehen ist, um wiederholt zu vorgegebenen Intervallen den aktuellen Abstand zwischen dem Referenzpunkt und aufeinanderfolgenden Meßpunkten auf einer Radoberfläche eines Rades (15) eines passierenden Radsatzes (11, 12) zu messen;
Detektorvorrichtungen (WD1, WD2), reagierend auf die Bewegung solcher Räder (15) entlang des Schienenbereiches hinter dem Referenzpunkt, um ein die Geschwindigkeit eines solchen Rades (15) repräsentierendes Signal zu erzeugen;
Computervorrichtungen, vorgesehen zum Ableiten einer Messung einer Winkellage eines jeden Radsatzes (11, 12) von den bekannten Intervallen, den Abstandsmessungen und den Geschwindigkeitssignalen; und
Vorrichtungen zum Vergleichen der gemessenen Winkellagen mit einem Standardwertebereich und zum Erfassen von Abweichungen davon.

7. Vorrichtung nach Anspruch 6, dadurch gekennzeichnet, daß die Meßvorrichtungen für das Geschwindigkeitssignal ein Paar von Detektoren (WD1, WD2) umfassen, die in beabstandeten Positionen entlang des Stranges befestigt sind, um ein Meßfenster einer vorbestimmten Länge (Lw) zu definieren, welches sich auf beiden Seiten des Referenzpunktes erstreckt.

8. Vorrichtung nach Anspruch 7, dadurch gekennzeichnet, daß der Abstandsmesser (22) mit den zwei Detektoren verbunden ist, um nur aktiviert zu werden, wenn sich ein Rad (15) innerhalb des Fensters befindet.

## Revendications

1. Système pour l'installation le long d'un rail (16) d'une voie de chemin de fer pour mesurer un angle défini entre une roue contrôlée (15) et une ligne tangentielle imaginaire sur le rail (16) sur lequel se déplace la roue contrôlée (15), le système comprenant :
un télémètre (22) monté en une position fixe à côté de la voie de chemin de fer (16) pour mesurer successivement, à des instants prédéterminés dans le temps le long d'un axe de mesure, une distance à partir de l'emplacement fixe jusqu'à la roue contrôlée (15) se déplaçant sur le rail (16), ce télémètre (22) produisant un signal de sortie corrélé à une distance entre la position fixe et des sites sur la roue contrôlée (15) interceptant l'axe de mesure à des instants respectifs dans le temps ; et
un capteur (WD1, WD2) sensible au mouvement de la roue contrôlée (15) sur le rail (16) pour produire un signal de sortie corrélé à un changement de position de la roue contrôlée (15) sur le rail (16) par rapport au temps, de sorte que les signaux permettent le calcul d'une valeur pour l'angle défini entre la roue contrôlée (15) et la ligne tangentielle imaginaire par rapport au rail en établissant une correspondance entre une variation de la distance mesurée le long de l'axe de mesure par rapport à la position fixe vers la roue contrôlée mobile (15) et la modification de position de la roue contrôlée sur le rail (16).

2. Procédé pour contrôler l'angle d'attaque des séries de roues (11, 12) d'un véhicule de chemin de fer (10) passant en succession sur une section de rail courbe comprenant :
la mise en place d'un télémètre (22) en un point de référence en une position qui est radiale par rapport à la section de rail courbe ; mesurer à plusieurs reprises en des intervalles connus, la distance instantanée entre le point de référence et les points de coïncidence successifs sur la surface plane de la roue (15) de chaque série de roues en déplacement (11, 12) ;
mesurer la vitesse des roues (15) de chaque série de roues (11, 12) se déplaçant le long de la section de voie devant le point de référence ; et
à partir des intervalles connus, les mesures de distance et la vitesse mesurée calculant l'angle d'attaque de chacune des séries de roues (11, 12) ;
comparer l'angle d'attaque calculé à une plage de valeurs standard et identifier les séries de roues (11, 12) dont l'angle d'attaque s'écarte de la plage standard.

3. Procédé selon la revendication 2, comprenant l'activation du télémètre (22) uniquement pendant les intervalles où on a une série de roues (11, 12) proche ou en coïncidence avec celui-ci.

4. Procédé selon la revendication 3, dans lequel la mesure de la vitesse est effectuée au moyen d'une paire de détecteurs de roue (WD1, WD2) espacés longitudinalement sur la section de voie pour définir une fenêtre qui s'étend des deux côtés de la position de télémètre (22), les détecteurs (WD1, WD2) mesurant le temps écoulé entre l'entrée de la série de roues (11, 12) dans la fenêtre et le départ de la série de roues (11, 12) hors de la fenêtre et calculant la vitesse de la série de roues (11, 12) à partir du temps écoulé et de la longueur connue de la fenêtre.

5. Procédé selon la revendication 4, dans lequel les détecteurs (WD1, WD2) sont utilisés pour commander le télémètre (22) afin qu'il ne fonctionne que pendant les périodes où la série de roues (11, 12) se situe à l'intérieur de la fenêtre.

6. Appareil pour contrôler l'angle d'attaque des séries de roues (11, 12) d'un véhicule de chemin de fer se déplaçant sur un tronçon de voie courbe comprenant :
un télémètre (22) positionné en un point de référence radial par rapport à la section de voie courbe, le télémètre (22) pouvant mesurer de façon répétée en des intervalles connus la distance instantanée entre le point de référence et des points de coïncidence successifs sur la surface plate d'une roue (15) d'une série de roues en déplacement (11, 12) ;
des moyens de détecteurs (WD1, WD2) sensibles au mouvement de la roue (15) le long de la section radiale devant le point de référence pour produire un signal représentatif de la vitesse de la roue (15) ;
des moyens de calculateur pouvant dériver à partir des intervalles connus, les mesures de distance et le signal de vitesse, une mesure de l'angle d'attaque de chaque série de roues (11, 12) ; et
des moyens pour comparer l'angle d'attaque mesuré avec une plage de valeurs standard et identifier les écarts.

7. Appareil selon la revendication 6, dans lequel les moyens de mesure du signal de vitesse comprennent une paire de détecteurs (WD1, WD2) montés en des emplacements espacés le long de voie pour définir une fenêtre de mesure de longueur prédéterminée (Lw) qui s'étend des deux côtés du point de référence.

8. Appareil selon la revendication 7, dans lequel le télémètre (22) est accouplé au détecteur pour n'être activé que lorsqu'une roue (15) se situe à l'intérieur de la fenêtre.
